# EUROPEAN PATENT SPECIFICATION

(11) **EP 1 568 608 B1**
(45) Date of publication and mention of the grant of the patent: **18.06.2008**
(21) Application number: 02793142.7
(22) Date of filing: 04.12.2002
(51) Int. Cl.: B64G 1/64, F16F 15/08, F16F 1/393

(54) **ATTENUATION DEVICE**
DÄMPFUNGSVORRICHTUNG
DISPOSITIF D'ATTENUATION

(43) Date of publication of application: 31.08.2005
(73) Proprietor: EADS CASA ESPACIO, S.L., 28022 Madrid (ES)
(72) Inventor: LANCHO DONCEL, Miguel, 28022 Madrid (ES)
(74) Representative: Elzaburu Marquez, Alberto
(86) International application number: PCT/ES2002/000577
(87) International publication number: WO 2004/050481

(56) References cited:
- EP-A1- 1 003 717
- EP-A1- 1 095 853
- FR-A- 2 050 235
- GB-A- 582 469
- US-A- 1 822 026
- US-A- 4 063 787
- US-A- 5 878 980
- US-A1- 2003 006 341

## Description

### OBJECT OF THE INVENTION

The present invention generally refers to an attenuating device for vibrations and shockwaves which are transmitted through a chain of structures belonging to a vehicle.

More specifically, the present invention refers to a passive type of attenuating device which reduces vibrations and shockwaves generated during flight in a space vehicle and transmitted through the structure of the space vehicle.

### STATE OF THE ART

Passive attenuation devices are known in the state of the art, U.S. patent number 6,202,961 by Wilke et al., for example, discloses a passive attenuation device reducing vibrations and shockwaves generated during the spacecraft flight.

This passive attenuation device comprises a straight circular hollow cylinder in which a set of horizontal rectangular slots have been made, distributed in several vertical planes or layers.

The horizontal slots are distributed so that they draw spatial curves in the manner of helices, i.e. they are not vertically aligned in columns. There are a large number of slots on each horizontal plane or layer, specifically more than six.

Each horizontal slot has an elongated rectangular shape, i.e. the vertical parallel sides are comparatively smaller in dimension than the horizontal sides of the rectangular horizontal slot.

The slotted hollow cylinder is externally surrounded by several rectangular segments made of a viscoelastic material completely covering the outside of the slotted cylinder. The rectangular segments or sheets are in turn externally surrounded by several rectangular sheets made of a rigid material such that they form a cylindrical ring holding the sheets of viscoelastic material against the slotted hollow cylinder.

In the known device the slots extend in depth in one direction through the thickness of the attenuation device to the opposite face.

The disclosed adaptor device has a series of drawbacks derived from its construction. For example, one drawback is derived from the high number of separations or bridges existing in each horizontal layer and, generally, in the slotted hollow cylinder. Bridge or separation is understood to be the part of material existing between two adjacent horizontal slots.

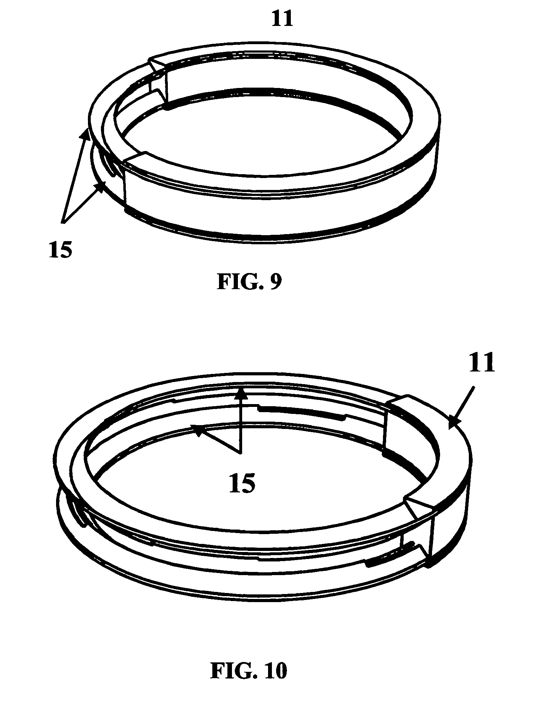

A distribution having excessive axial symmetry both in the number of slots and in that of the bridges between them is observed. This translates into a loss of attenuation (even a possible amplification) at certain frequencies associated to cylindrical structure breathing modes and support conditions with axial symmetry. This is illustrated in the drawings of figures 9 to 12 of US patent 6,202,961 of Wilke et al., which show the features of the proposed system.

Associated to this type of configuration is the fact that the structural transition between the different layers and the two end ones and the adjacent structures is very sudden (there is no surface to diffuse stresses), which implies an overload of the sheets of the attenuator as well as of the adjacent structures which must bear important peaks of tractive/compressive stresses (overflows).

Another drawback is the loss of rigidity due to the high number of horizontal layers and also the high number of horizontal slots per layer. It must be taken into account that rigidity is required for good control over the spacecraft flight course and, therefore, a compromise must be reached between attenuation and rigidity, given that a greater number of layers and slots mean greater attenuation, which leads to less rigidity, perhaps giving rise to the stall of the spacecraft and thus the payload.

On the other hand, it is observed that the outer cylinder, floating over the viscoelastic material, contributes very little to the overall rigidity of the system. In the same manner its contribution to damping is scarcely effective. External loads induce relative movements between the different layers. These movements generate shear deformations of the viscoelastic material. However, these deformations are at most half the movement generated between the upper and lower interfaces, demultiplying the reaction to shear force.

The most important drawback of this configuration is, in any case, the inability of decoupling the contradictory attenuation and rigidity requirements. By basing its operation on the linear load-deformation behaviour (both of the metal as well as the viscoelastic components), any increase in rigidity must be performed at the expense of a loss in attenuating capacity and vice versa.

US 4063 787 shows a device in which the "slots" are filled with elastomeric attenuation material and extend all the way from top to bottom, all around parallel to the circumferential direction, and slighty offset with respect to the longitudinal axis, of the device.

It is necessary to develop an attenuation device which attenuates high and low frequency vibrations and shockwaves, which provides a minimum level of rigidity that allows achieving precise navigation of the spacecraft without affecting the attenuating capacity.

### CHARACTERISATION OF THE INVENTION

The attenuation device of the present invention is defined in independent claim 1.

Dependent claims define further embodiment of the invention.

An object of the present invention is to generate a structural labyrinth for passing the load from the lower interface of the surface of revolution, for example, a straight hollow cylinder, up to the upper interface.

Another object is to fill in the cavities of the slots with an elastic material such that the elastic material and the remaining material of the surface of revolution form two continuous and complementary labyrinth structures, that is, where there is elastic material there is no material corresponding to the surface of revolution and vice versa.

With this arrangement a compact and reduced weight structure is achieved which works as a block of composite material, that is, a matrix corresponding to the elastic material and fibre corresponding to the surface of revolution, such that each element plays a part, for example, the material of the cylindrical surface of revolution would work as the fibres providing rigidity features, and the elastic material would work as the matrix complementing the rigidity, and providing energy dissipation capacity.

Another advantage of the present invention is that elastic and dampening means form part of the structure itself, such that they are integrated along its entire surface and allow being adjusted to interfaces of large dimensions such as in the field of space vehicles such as shuttles and/or satellites. Therefore, low and mid frequency vibrations (0 to 2000 Hz) of long duration, lasting several minutes, induced by engines and cyclic operation elements, and short duration transitory phenomena such as shocks induced by separations and which generate vibrations in a very wide spectrum (up to 10000 Hz) but of a duration of a thousandth of a second, are attenuated and dampened.

The advantage of this arrangement is that it allows managing the contribution of each element in the manner most suitable to the application requirements. If more dissipating function and less rigidity are required, it will suffice to increase and decrease the proportions of each material respectively. Taken to the limit, the functions of matrix and fibre could be reversed.

Consequently, the configuration described allows resolving the problem of compatibility between the minimum rigidity required for flying and the attenuation capacity. On the one hand the matrix, an elastic material, provides the mechanical properties required for the fibre, a surface of revolution, to operate suitably, as the matrix is confined in the fibre. On the other hand this contribution does not eliminate the attenuation and filtering capacities as the slotted surface of revolution is still the main load pathway since it is the most rigid.

Another advantage added by the fibre-matrix composite in relation to compatibility between flying and filtering is the non-linearity in its response to external loads. While the slotted surface of revolution operates on an elastic basis, i.e. linear, the elastic material operates on an inelastic basis, i.e. non-linear, which contributes to the isolating capacity of the system, as the external loads increase deformations of the matrix, the latter responds by increasing rigidity due to its elastic nature.

The aforementioned phenomenon is very effective even when the elastic material is sufficiently confined. This confinement is ensured by the configuration of the slotted surface of revolution.

Thus, when the slotted surface of revolution is deformed such that it decreases the thickness of the slots, the elastic material occupying the slots is forced to compress and tries to expand in a direction that is perpendicular to that of the deformation, which is partially prevented by the elastic material occupying the rest of the slot. With an angled slot arrangement, the same effect is achieved whether the deformation is in the vertical direction or in the horizontal direction.

Therefore, the passive attenuation device of the invention may reduce and/or eliminate the vibrations and shockwaves generated during the flight of a space vehicle, namely a spacecraft, such that if the vibrations and shockwaves generated during the flight were to reach the payload transported, they would not produce any damage in the payload.

### BRIEF DESCRIPTION OF THE DRAWINGS

A more detailed explanation of the invention is provided in the following description based on the attached figures in which,
Figure 1 shows an isometric view of a framework of structures corresponding to a space vehicle according to the invention,
Figure 2 shows an isometric view of an attenuating device according to the invention,
Figure 3 shows two sectioned fragments of the attenuating device according to the invention,
Figure 4 shows another two sectioned fragments of another embodiment of the attenuating device according to the invention,
Figure 5 shows an isometric view of an elastic material of the attenuating device according to the invention,
Figure 6 shows another view of the elastic material of the attenuating device according to the invention,
Figures 7 and 8 show other isometric views of the attenuating device according to the invention,
Figures 9 and 10 show two isometric views of the complementary distribution of the components of the attenuating device according to the invention,
Figure 11 shows the operation of the attenuation device according to the invention as an attenuating shock filter,
Figure 12 shows how the attenuating device modifies the load pathway according to the invention,
Figure 13 shows an exploded isometric view that allows following the linear behaviour load pathway in the attenuating device according to the invention, and

Figure 14 shows an exploded isometric view that allows following the complementary non-linear load pathway in the attenuating device according to the invention.

### DESCRIPTION OF THE INVENTION

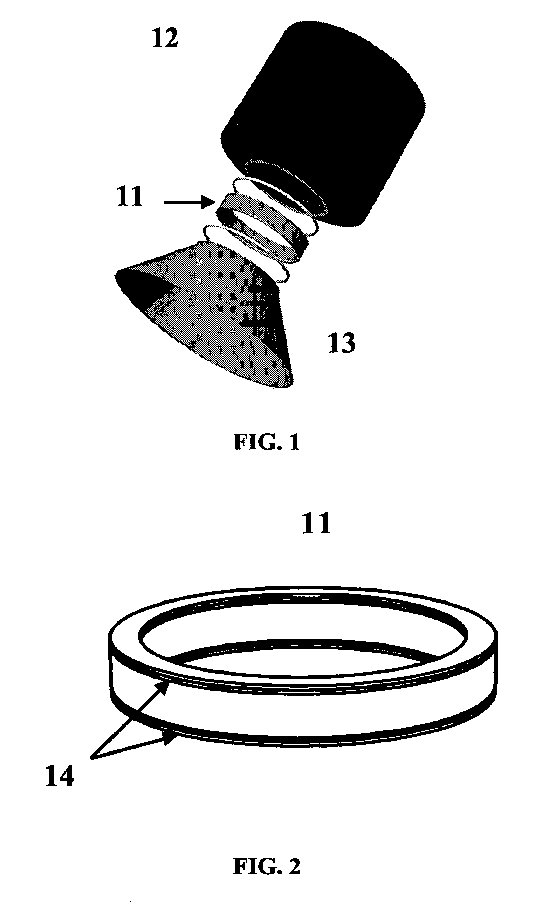

Figure 1 shows an attenuating device 11 connected simultaneously to an upper interface 12 and a lower interface 13 corresponding to the structure of a space vehicle capable of flying in space outside the Earth's atmosphere.

In said figure it can be observed that the primary structures in charge of the structural continuity and integrity of the vehicle consist in large cylindrical or conical structures, generally with revolution symmetry, which propagate through themselves the vibratory phenomena produced during flight, without hardly dampening them due to their low dissipation coefficient and occasionally amplifying them at certain frequencies. Accordingly, the equipment and payloads must be qualified to endure this environment, which leads to greater complexity in their structural design.

Figure 2 shows in turn the attenuating device comprising a hollow body of revolution of cylindrical cross section, for example, a straight hollow cylinder 11 between the vertical faces of which several slots 14 are distributed in levels, for example, there are four slots distributed in two levels and two slots 14 on each vertical face of the straight cylinder 11.

Each slot 12 may have a predetermined shape, that is, the slot 14 extends according to a given curve, i.e. a circle, for example slot 14 is generated by a line passing through a fixed point, the vertex, which may be located at the axis of revolution of the straight cylinder 11, and follows the circle.

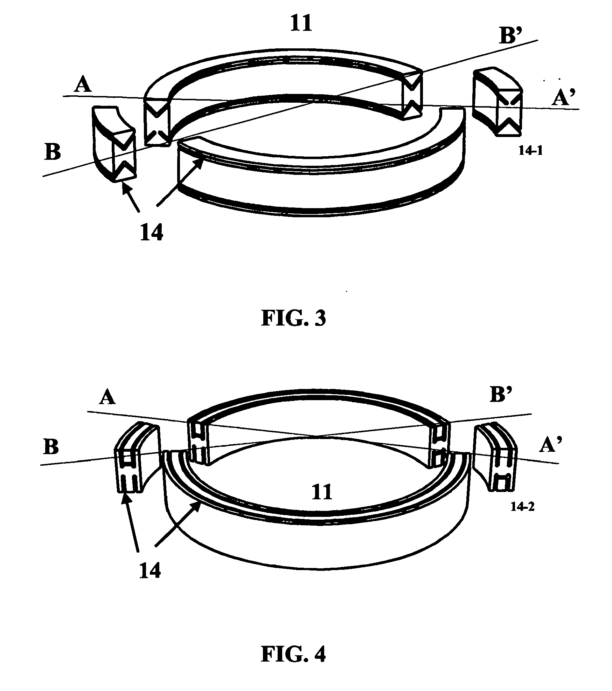

The slots 14 of both vertical faces of the straight cylinder 11 may be joined in some sections and not in others. This can be observed, for example, in fragment 14-1 according to axes A-A', B-B', shown in Figure 3. The V-shaped slots 14 of the upper section of the fragment of section 14-1 are not joined and, however, the inverted-V shaped slots 14 of the lower part are joined.

Accordingly, the central part of the straight cylinder 11 has a predetermined spool shape, i.e. two cones joined at the vertex.

As can be seen in Figure 4, the slots 14 may be performed in the horizontal end faces of the straight cylinder 11, i.e. each slot 14 may be generated by a line moving parallel to itself, and/or also to the axis of revolution of the straight cylinder 11 and following a given curve.

Also, in this case the slots 14 of the upper part of the fragment of section 14-2 are not joined and, however, the slots 14 of the lower part are joined. Therefore, the central part of the straight cylinder 11 has a predetermined H-type shape.

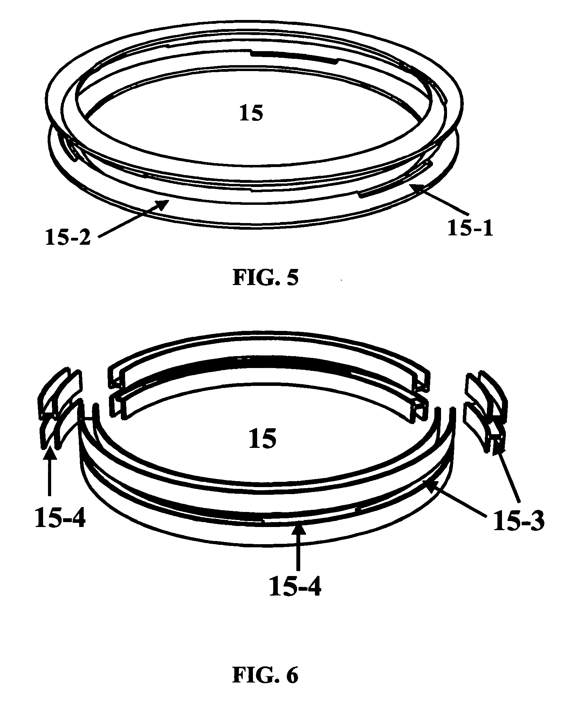

Coming back to Figure 3, the existing space obtained by performing the slots or gaps 14 mediating between the parts of the straight cylinder 11 is filled with an elastic material 15 such as an elastomer, viscoelastic material or the like, of low rigidity and a high dampening coefficient, shown in Figures 5 and 6, which complete the functional features of the attenuating device of the invention. The single-body ring-shaped attenuating device shown in Figures 2, 3, 4, 9 and 10 is thus obtained.

Accordingly, the attenuating device of a cylindrical body 11 thus has a compact configuration equivalent to that of fibre-resin type composite materials in which the space that is not occupied by the fibre is occupied by the resin and vice versa. As shown in Figures 9 and 10, the space that is not occupied by the material of the cylinder 11 is occupied by the elastic material 15 and vice versa. This compact and continuous configuration has great importance in the functional behaviour of the attenuating device which is explained below.

It must be observed that the elastic material 15 has two parts or bands, an upper part corresponding to the upper slots 14 and a lower part corresponding to the lower slots 14 of the cylinder 11. In the same Figure 5 the areas of union 15-2 of the slots 14 of both the inner and outer faces of the cylinder 11 and the areas 15-1 where there is no union between the slots 14 of both faces can be observed.

In a similar manner, Figure 6 shows the two parts of the elastic material 15 corresponding to the slots 14 of the straight cylinder of Figure 4, wherein the slots 14 are performed in the horizontal end faces of the cylinder 11. Likewise, areas of union 15-3 of the slots 14 of both end faces and areas 15-4 where there is no union between the slots 14 of both end faces of the cylinder 11 can be observed.

In short, the elastic material 15 on both sides of the slotted cavity 14 is joined, i.e. it has a physical continuity, areas 15-3, through each one of the slots, and where the elastic material 15 is further enclosed or confined externally by the outer walls of the straight cylinder 14. It must be observed that confinement of the elastic material 15 varies on the basis of the flight stage of the craft.

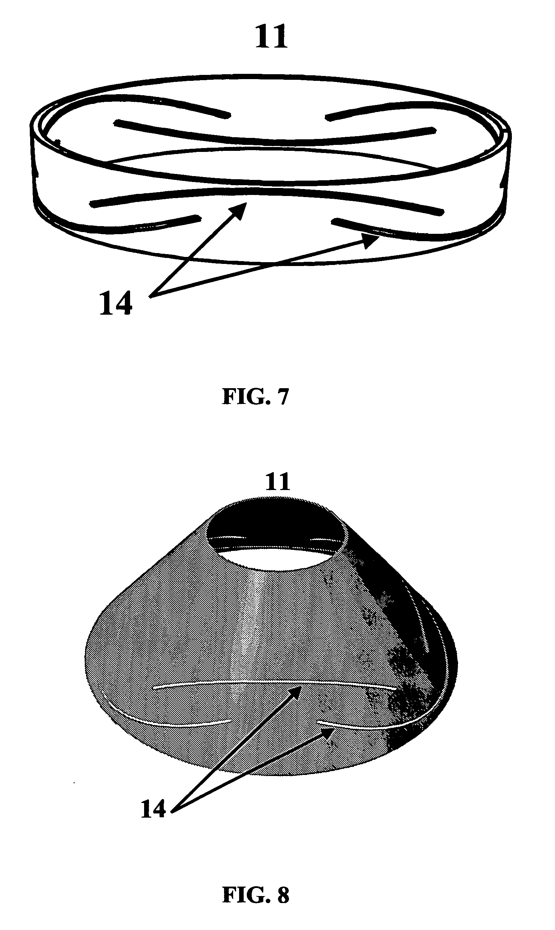

Figure 7 shows another type of slots 11 where each layer of slots follows an undulated continuous or discontinuous curve. Also, said type of slots 14 may be located in the hollow cone frustum-type surface of revolution 11, see Figure 8. Likewise, parallel slots 14 may be arranged on the cone frustum 11 in the same manner as in the straight cylinder-type surface of revolution 11. This cone frustum shape is suitable for adapting adjacent structures having different diameters.

Coming back to Figure 2, the slotted cylinder 11 is slotted such that the direct load pathway between the lower interface 13 and the upper interface 12 is always interrupted by slots 14. This is achieved by performing two levels of angled slots 14 at different heights, for example shown in Figures 9 and 10. The slots 14 produce four conical surface cavities such that the straight cylinder 11 is divided in some sections into three parts separated by the V-shaped and inverted V-shaped or U-shaped and inverted U-shaped cavities.

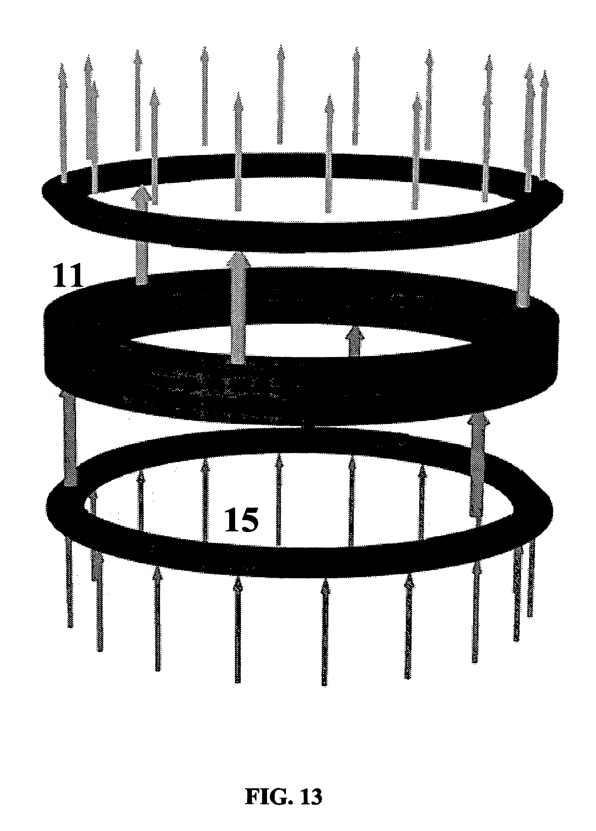

These three parts are not completely separated, rather the upper part is joined with the intermediate part in at least three areas, and in another three areas, at 60° to the former, the intermediate and the lower parts are joined, see figure 13. This is achieved by interrupting the continuity of each level of slots 14, in turn, in three sections such that a space is provided without a slot, providing the three bridges of predetermined size, that is narrow load passages as can be seen in Figures 3, 4, 5, 6, 9 and 10 showing the spatial shape of the levels of slots 14.

The only possible pathway for the disturbance is through the six passages between the different levels, therefore through a labyrinthic pathway. That is, the two levels of slots 14 perform the function of attenuating the shockwaves attempting to advance from the lower part 13 of the spacecraft towards the upper part 12 thereof where the payload is located, which is rather sensitive to said shockwaves.

Coming back to Figure 5, the two bands of elastic material 15 are forced to deform simultaneously in compression-traction and in shear when axial and/or radial loads occur in the load passage areas. These loads generate relative movements between the areas of the cylinder 11 which are separated by the elastic material 15.

The resistance of these bands of elastic material 15 to movement provides on the one hand dampening strength due to the reaction of the elastic material 15 to shear deformation being a movement dampening factor, and on the other even more importantly, the increase in rigidity as the compressive deformation increases, i.e. the non-linear behaviour. Therefore, the elastic material 15 contributes to the rigidity of the cylinder this contribution being completely compatible with the requirement to attenuate, as described below.

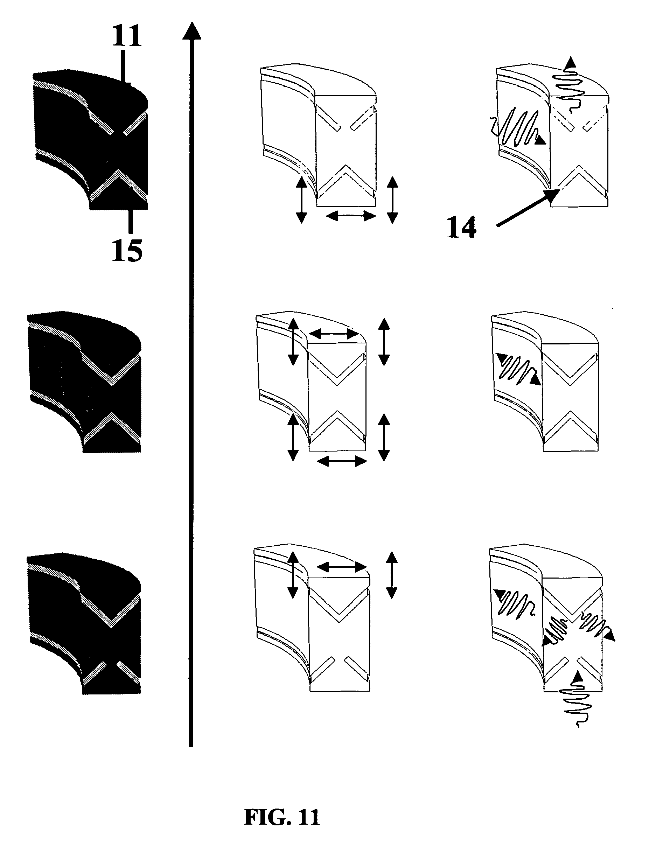

The resistance to deformation provides an increase in the rigidity of the attenuating device, which was reduced with the slots 14. Furthermore, this rigidity is of a variable nature, i.e. it increases with displacement. For very small displacements, which are those produced when the shock event propagates through the structures, the rigidity provided is negligible. It is as if it were not present. Thus, as can be seen in Figure 11, following it as indicated by the arrow, when the shock disturbance which comes from the lower interface 13 tries to advance towards the upper interface 12, it finds the lower level of slots 14 on which it reflects and advances only when it finds one of the three lower passage areas, see the lower part of Figure 11.

Continuing through these sections and finding the next level of slots 14 preventing passage, one part of the disturbance is reflected in them and another part travels circularly through the structural area between the slots 14, see the intermediate part of Figure 11. When it finally finds the upper passage it has lost an important part of its energy. Furthermore, in the process all the natural vibratory behaviour, normal modes, of the system formed by the interfaces 12, 13 joined by the attenuating device has been modified, on the nature of which the propagation capacity of the disturbance depends.

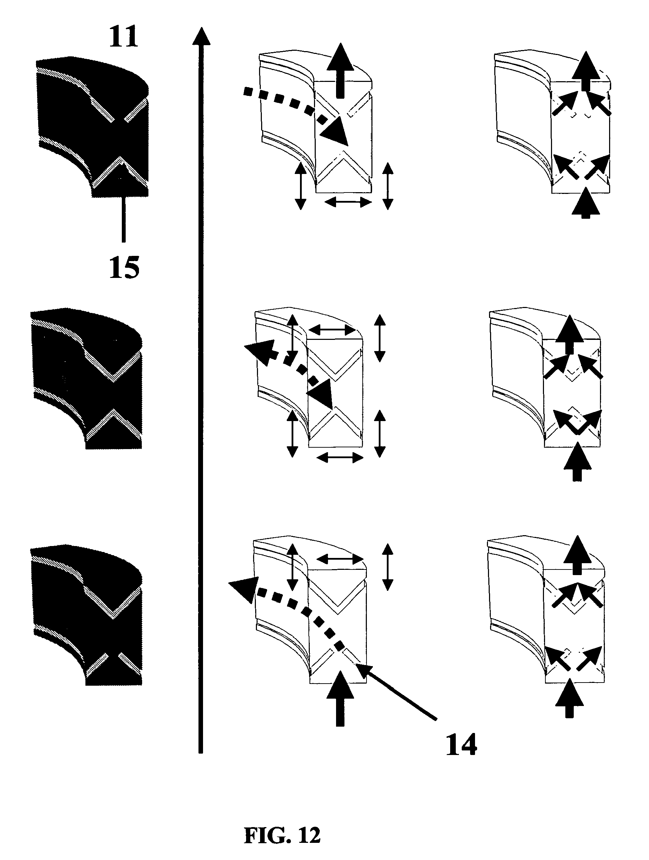

In Figure 12 the operation of the attenuating device when rigidity is required has been represented. This occurs when there are vibrations or gusts of wind during part of the flight creating important shifts in the centre of gravity of the spacecraft and during the entire flight in order to allow controlling and flying the craft. In both cases it is also beneficial to have an important capacity for energy dissipation, dampening. In both cases important deformations of the slotted straight cylinder 11 would occur if the elastic material 15 were not present.

Since the elastic material 15 is embedded in the slotted cylinder 15, the elastic material 15 opposes resistance to these non-linear deformations, which is translated into a new load pathway through the elastic material 15 as can be seen in Figure 12 in the diagrams on the right hand side. This pathway is added to the initial structural pathway, which was already present, which is the same as the shockwaves, seen in the diagrams in the central part, and which is what provides the linear rigidity. With the addition of both effects the rigidity required for the spacecraft to fly is achieved, without having modified the filtering capacities determined by the linear effect.

In Figure 13, the former can be seen in more detail in a three-dimensional view, such that the load is transmitted through the linear component of the attenuating device such that part of a quasi-uniform flow distribution reaching the lower interface 13 is transformed into a distribution in three small sectors at 120° from one another, continuous in three sectors rotated 60° from the previous ones and ending in the upper interface 12 regenerating a quasi-uniform flow.

In fact, the greater the attenuation capacity of the device the less uniform the flow in the adjacent structures given that this is achieved by reducing the load passage areas, bridges, to a minimum. In order to compensate this effect, the non-linear component, the elastic material 15, plays an important role due to the compact configuration of the device.

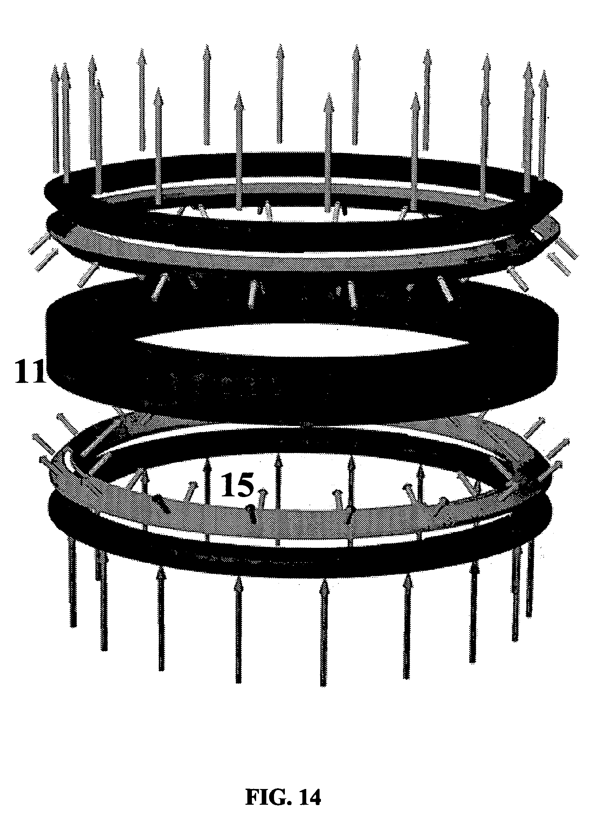

Figure 14 shows how the non-linear element of the device participates. In this case the load distribution is kept uniform during the whole process due to the continuity of the cylinder/elastic material system. In this manner the overflow effects that would be generated on the adjacent structures by the linear element are partly corrected.

Likewise, it is observed that the elastic material 15 is confined in the cavities created by the slots 14 and their shape, whether V-shape and inverted V-shape or H-shape and inverted H-shape, multiplies the rigidity effect.

When the elastic material 15 is compressed between two surfaces that are close to each other but the edges of which are free, the volume of elastic material 15 is maintained and rigidity decreases. If the edges are closed expansion of the elastic material 15 through them is prevented and it is only possible to bring the surfaces closer to each other by decreasing the volume, which means using the energy required to compress a confined fluid. Therefore, rigidity increases. The V-shape or H-shape of the horizontal levels of slots 14 are those which provide the confinement in a simple and natural manner.

It must be stressed that this shape of slot 14 allows, at the same time, reacting with loads parallel and normal to the surface of the elastic material 15, thus achieving that the latter works in shear, dissipating energy and dampening, and in compression providing additional rigidity.

Another feature affecting the behaviour of the attenuating device of the invention is the shape of each one of the slots 14 distributed in layers. As observed in Figure 4, the shape of the slot 14 and the course followed by the slots 14 when following the perimeter of the cylinder 11 may be straight, for example. In this case the shear and compressive deformations of the elastic material 15 are completely decoupled.

They may also follow a special course which helps to avoid the occurrence of overflows, as shown in Figure 7. Likewise, slots 14 may be used with other types of shapes, such as oval slots, where the axis of greater dimension is perpendicular to the axis of the straight cylinder 11, the smaller axis of the oval being parallel to the axis of revolution of the cylinder 11, not shown.

The mechanical features of the attenuating device may be easily varied to adapt to different requirements that may be demanded of it. For this it will be sufficient to adjust the size of the slots 14 to a compromise between the filtering requirements and the mechanical requirements.

## Claims

1. An attenuation device including a hollow body of revolution (11)having a surface comprising an inner and outer face and a first and second end face, and comprising a set of slots (14) distributed over the surface of the body of revolution (11), the body of revolution (11) comprising an elastic material (15) within the limits defined by the slots (14), **characterized in that** the slots (14) do not extend in depth in one direction all the way through the thickness of the body of revolution (11) to the opposite face.

2. An attenuation device according to claim 1, wherein the body of revolution (11) has a circular cross section.

3. An attenuation device according to claim 2, wherein the body of revolution (11) is a straight cylinder.

4. An attenuation device according to claim 2, wherein the body of revolution (11) is a cone frustum.

5. An attenuation device according to claims 3 or 4, wherein the set of slots (14) is distributed on both inner and outer faces, or both the first and second end faces, of the body of revolution (11).

6. An attenuation device according to claim 5, wherein each slot (14) extends longitudinally according to a given curve on both inner and outer faces, or both the first and second end faces, of the body of revolution (11).

7. An attenuation device according to claim 6, wherein each slot (14) extends longitudinally according to an undulating curve.

8. An attenuation device according to claims 6 or 7, wherein at least the beginning of one slot (14) located on one face of the body of revolution (11) and the end of another slot (14) located on another face of the body of revolution (11), are parallel.

9. An attenuation device according to claims 6 or 7, wherein at least two slots (14) on the inner and outer faces or on the first and second end faces of the body of revolution (11) are parallel.

10. An attenuation device according to claims 8 and 9, wherein at least two slots (14) on the inner and outer faces or on the first and second end faces of the body of revolution (11) communicate.

11. An attenuation device according to claim 8, wherein the set of slots (14) defines on the body of revolution (11) a spool formed by two cones joined at the vertex.

12. An attenuation device according to claims 9 and 10, wherein the set of slots (14) defines on the body of revolution (11) an H-type shape.

13. An attenuation device according to claim 1, wherein the elastic material (15) is an elastomer.

14. An attenuation device according to claim 1, wherein the elastic material (15) is a viscoelastic material.

## Patentansprüche

1. Dämpfungsvorrichtung mit einem hohlen Rotationskörper (11), der eine Oberfläche hat, die eine Innen- und Außenfläche sowie eine erste und zweite Endfläche aufweist, und mit einem Satz Schlitzen (14), die über der Oberfläche des Rotationskörpers (11) verteilt sind, wobei der Rotationskörper (11) ein elastisches Material (15) in den durch die Schlitze (14) festgelegten Grenzen aufweist, **dadurch gekennzeichnet, daß** sich die Schlitze (14) In der Tiefe nicht in einer Richtung voll durch die Dicke des Rotationskörpers (11) zur entgegengesetzten Fläche erstrecken.

2. Dämpfungsvorrichtung nach Anspruch 1, wobei der Rotationskörper (11) einen, kreisförmigen Querschnitt hat.

3. Dämpfungsvorrichtung nach Anspruch 2, wobei der Rotationskörper (11) ein gerader Zylinder ist.

4. Dämpfungsvorrichtung nach Anspruch 2, wobei der Rotationskörper (11) ein Kegelstumpf ist.

5. Dämpfungsvorrichtung nach Anspruch 3 oder 4, wobei der Satz Schlitze (14) sowohl auf der Innen- als auch Außenfläche oder sowohl auf der ersten als auch zweiten Endfläche des Rotationskörpers (11) verteilt ist.

6. Dämpfungsvorrichtung nach Anspruch 5, wobei sich jeder Schlitz (14) gemäß einer vorgegebenen Kurve sowohl auf der Innen- als auch Außenfläche oder sowohl auf der ersten als auch zweiten Endfläche des Rotationskörpers (11) längs erstreckt.

7. Dämpfungsvorrichtung nach Anspruch 6, wobei sich jeder Schlitz (14) gemäß einer gewellten Kurve längs erstreckt,

8. Dämpfungsvorrichtung nach Anspruch 6 oder 7, wobei mindestens der Anfang eines Schlitzes (14), der auf einer Fläche des Rotationskörpers (11) liegt, und das Ende eines weiteren Schlitzes (14), der auf einer weiteren Fläche des Rotationskörpers (11) liegt, parallel sind.

9. Dämpfungsvorrichtung nach Anspruch 6 oder 7, wobei mindestens zwei Schlitze (14) auf der Innen- und Außenfläche oder auf der ersten und zweiten Endfläche des Rotationskörpers (11) parallel sind.

10. Dämpfungsvorrichtung nach Anspruch 8 und 9, wobei mindestens zwei Schlitze (14) auf der Innen- und Außenfläche oder auf der ersten und zweiten Endfläche des Rotationskörpers (11) in Verbindung stehen.

11. Dämpfungsvorrichtung nach Anspruch 8, wobei der Satz Schlitze (14) auf dem Rotationskörper (11) eine Spule festlegt, die durch zwei am Scheitel verbundene Kegel gebildet ist.

12. Dämpfungsvorrichtung nach Anspruch 9 und 10, wobei der Satz Schlitze (14) auf dem Rotationskörper (11) eine H-artige Form festlegt.

13. Dämfungsvorrichtung nach Anspruch 1, wobei das elastische Material 1, (15) ein Elastomer ist.

14. Dämpfungsvorrichtung nach Anspruch 1, wobei das elastische Material (15) ein viskoelastisches Material ist.

## Revendications

1. Dispositif d'atténuation comprenant un corps de révolution creux (11) comportant une surface comprenant une face intérieure et extérieure et une première et une seconde faces d'extrémité, et comprenant un ensemble de fentes (14) réparties sur la surface du corps de révolution (11), le corps de révolution (11) comprenant un matériau élastique (15) dans les limites définies par les fentes (14), **caractérisé en ce que** les fentes (14) ne s'étendent pas en profondeur dans une direction sur la totalité de l'épaisseur du corps de révolution (11) jusqu'à la face opposée.

2. Dispositif d'atténuation selon la revendication 1, dans lequel le corps de révolution (11) comporte une section transversale circulaire.

3. Dispositif d'atténuation selon la revendication 2, dans lequel le corps de révolution (11) est un cylindre droit.

4. Dispositif d'atténuation selon la revendication 2, dans lequel le corps de révolution (11) est frustoconìque.

5. Dispositif d'atténuation selon les revendications 3 ou 4, dans lequel l'ensemble de fentes (14) est réparti sur les deux faces intérieure et extérieure ou à la fois la première et la seconde faces d'extrémité du corps de révolution (11).

6. Dispositif d'atténuation selon la revendication 5, dans lequel chaque fente (14) s'étend longitudinalement selon une courbe donnée sur les deux faces intérieure et extérieure ou à la fois la première et la seconde faces d'extrémité du corps de révolution (11).

7. Dispositif d'atténuation selon la revendication 6, dans lequel chaque fente (14) s'étend longitudinalement selon une courbe ondulée.

8. Dispositif d'atténuation selon les revendications 6 ou 7, dans lequel au moins le début d'une fente (14) située sur une face du corps de révolution (11) et l'extrémité d'une autre fente (14) située sur une autre face du corps de révolution (11) sont parallèles.

9. Dispositif d'atténuation selon les revendications 6 ou 7, dans lequel au moins deux fentes (14) sur les faces intérieure et extérieure ou sur la première et la seconde faces d'extrémité du corps de révolution. (11) sont parallèles.

10. Dispositif d'atténuation selon les revendications 8 et 9, dans lequel au moins deux fentes (14) sur les faces intérieure et extérieure ou sur la première et la seconde faces d'extrémité du corps de révolution (11) communiquent.

11. Dispositif d'atténuation selon la revendication 8, dans lequel l'ensemble de fentes (14) définit sur le corps de révolution (11) une bobine forcée par deux cônes teints au sommet.

12. Dispositif d'atténuation selon les revendications 9 et 10, dans lequel l'ensemble de fentes (14) définit sur le corps de révolution (11) une forme en H.

13. Dispositif d'atténuation selon la revendication 1, dans lequel le matériau élastique (15) est un élastomère.

14. Dispositif d'atténuation selon la revendication 1, dans lequel le matériau élastique (15) est un matériau viscoélastique.
